# EUROPEAN PATENT SPECIFICATION

(11) **EP 4 106 947 B1**
(45) Date of publication and mention of the grant of the patent: **15.04.2026**
(21) Application number: 21703562.5
(22) Date of filing: 01.02.2021
(51) Int. Cl.: B24B 27/00, B24B 49/00, B25J 11/00

(54) **GRINDING OR POLISHING DEVICE AND METHOD FOR TREATING OF A WORKPIECE**
SCHLEIF- ODER POLIERVORRICHTUNG UND VERFAHREN ZUM BEARBEITEN EINES WERKSTÜCKS
DISPOSITIF DE MEULAGE OU DE POLISSAGE ET PROCÉDÉ DE TRAITEMENT D'UNE PIÈCE

(30) Priority: 18.02.2020 NL 2024933
(43) Date of publication of application: 28.12.2022
(73) Proprietor: Tollenaar Industries B.V., 8042 PH Zwolle (NL)
(72) Inventor: TOLLENAAR, Roland Wilhelm Anton, 8042 PH Zwolle (NL)
(74) Representative: Melchior, Robin
(86) International application number: PCT/NL2021/050061
(87) International publication number: WO 2021/167445

(56) References cited:
- WO-A1-02/064323
- JP-A- S6 176 265
- US-A1- 2019 054 615
- US-A1- 2019 232 502

## Description

### BACKGROUND

The invention relates to a grinding or polishing device and a method for treating a workpiece.

Grinding processes can be very labor intensive. Hence, attempts have been made to automate the grinding process, i.e. by mounting a grinding tool to a robotic manipulator and closely following the contour of a workpiece. This has proven difficult, as the exact position of the workpiece is unknown and, even if the position is known, the surface of the workpiece may have irregularities, i.e. as a result of burrs, that make it notoriously difficult to know the exact position of a surface. The known robotic manipulators are provided with complex impedance control means, i.e. vision, force sensors, torque sensors, etc.) to achieve a certain level of active compliance, i.e. the ability of the robotic manipulator to actively and adaptively control the path of the grinding tool relative to the workpiece.

US 2019/054615 A1 discloses an apparatus and method for surface finishing, including a robot and an end effector.

### SUMMARY OF THE INVENTION

A disadvantage of the known grinding device is that the active impedance control is relatively complex and costly. Moreover, the active impedance control requires complex programming to obtain a reasonable level of compliance.

It is an object of the present invention to provide a grinding or polishing device and a method for grinding a contour of a workpiece, wherein the complexity and/or cost of the grinding or polishing device can be reduced.

According to a first aspect, the invention provides a grinding or polishing device for treating a workpiece, wherein the grinding or polishing device comprises a tool holder for holding a grinding or polishing tool and a mounting head for mounting the tool holder to a multi-axis manipulator, wherein the tool holder is rotatable with respect to the mounting head about a pivot axis, wherein the grinding or polishing device further comprises a sensor for converting at least one parameter indicative of an angular position of the tool holder about the pivot axis into an output signal that can be used for determining a control signal for controlling the multi-axis manipulator.

The output signal can be used to directly or indirectly determine the angular position of the tool holder, and the grinding or polishing tool held by said tool holder, relative to the mounting head. If the shape or contour of the workpiece is known, i.e. by vision technology, the information about the angular position of the tool holder for a certain position along the shape or contour of the workpiece can be used to determine the grinding or polishing angle of the grinding or polishing tool with respect to a particular surface of the workpiece and/or the relationship between the position of the multi-axis manipulator, the grinding or polishing angle and/or the angular position of the tool holder with respect to the workpiece or the mounting head. The output signal can be used to control the multi-axis manipulator to adjust the position of the grinding or polishing device as a whole relative to the workpiece, and thereby adjust or correct the grinding or polishing angle to a desired range or value.

In one embodiment the sensor is a rotary encoder for measuring the angular position of the tool holder about the pivot axis, wherein the output signal is representative of said angular position. By measuring the angular position of the tool holder directly, there is no need for other input, parameters and/or calculations to determine said angular position.

In an alternative embodiment the sensor is a proximity sensor for measuring a proximity of the tool holder with respect to the mounting head and/or the workpiece, wherein the output signal is representative of said proximity. The proximity sensor can act as a switch to indicate a zero position of the tool holder relative to the mounting head and/or to determine a relationship between the measured proximity and the angular position of the tool holder relative to the mounting head and/or the workpiece.

In a further alternative embodiment the sensor is an imaging device for capturing an image of the tool holder and/or the workpiece, wherein the output signal is representative of said image. The captured image can be used to determine the position of the workpiece relative to the multi-axis manipulator, the mounting head and/or the tool holder or the position of the tool holder relative to the multi-axis manipulator, the mounting head and/or the workpiece. This information can be used to indirectly determine a relationship between the relative position(s) and the angular position of the tool holder relative to the mounting head and/or the workpiece.

In an embodiment the grinding or polishing tool comprises a tool body and a grinding or polishing member that is rotatable with respect to the tool body about a rotation axis, wherein tool holder is arranged for holding the grinding or polishing tool such that the pivot axis extends perpendicular to the rotation axis. Hence, the rotation axis of the grinding or polishing member can be pivoted or tilted about the pivot axis to passively follow the contour of the workpiece at a certain grinding or polishing angle depending on the relative position of the grinding or polishing device as whole relative to the workpiece.

In a further embodiment the grinding or polishing device comprises a control unit that is operationally connected to the sensor for receiving the output signal from said sensor, wherein the control unit is arranged for sending the control signal to the multi-axis manipulator in response to the output signal from the sensor. Hence, the multi-axis manipulator can be controlled based on the output signal of the sensor.

Preferably, the multi-axis manipulator is arranged for positioning the grinding or polishing device as a whole with respect to the workpiece, wherein the control unit is arranged for sending the control signal to the multi-axis manipulator in response to the output signal from the sensor to adjust the position of the grinding or polishing device relative to the contour of the workpiece. By adjusting the position of the grinding or polishing device relative to the contour, the tool holder, and thus the grinding or polishing tool held by said tool holder, will automatically and/or passively be rotated or pivoted about the pivot axis, thus effectively changing, correcting and/or controlling the grinding or polishing angle.

More preferably, the control unit is arranged for controlling the position of the grinding or polishing device relative to the workpiece such that the grinding or polishing tool remains at a constant or substantially constant grinding or polishing angle to the workpiece. In other words, when the output signal of the sensor indicates that the angular position of the tool holder is changing relative to the mounting head along a part of the contour or during a stage of the grinding process where it should not change, i.e. due to unexpected or small variations in said contour, the position of the grinding or polishing device relative to the contour of the workpiece can be adjusted accordingly to compensate.

In a further embodiment the control unit is arranged for sending a control signal to the multi-axis manipulator to move said multi-axis manipulator in a translation relative to the workpiece, wherein the control unit is further arranged for determining, based on the output signal from the sensor, a relationship between translation of the multi-axis manipulator and the parameter indicative of the angular position of the tool holder about the pivot axis. Said relationship can be used to determine the appropriate control signal for the multi-axis manipulator to position the tool holder in a position that corresponds to a certain angular position in accordance with said relationship.

Preferably, the determination of the relationship comprises the use of a goniometric function with the angular position as one of the parameters. A goniometric function, in particular a trigonometric function, can be used to easily calculate the relationship between a translation of the multi-axis manipulator and the resulting angular position.

Additionally or alternatively, the determination of the relationship comprises the use of a computer model representative of the mounting head, the tool holder and/or the grinding or polishing tool. The computer model can be an accurate representation of the mounting head, the tool holder and/or the grinding or polishing tool, including, but not limited to, dimensions, shape and/or mechanical properties, such as joints, hinges and the degrees of freedom thereof.

In another embodiment the tool holder is freely or passively rotatable with respect to the mounting head about the pivot axis. Hence, the tool holder is able to passively follow the contour of the workpiece when allowed to do so by the positioning of the grinding or polishing device relative to the workpiece.

In another embodiment the tool holder further comprises one or more biasing members for biasing the grinding or polishing tool to rotate about the pivot axis in a bias direction. The biasing can ensure that the grinding or polishing tool is pressed onto the workpiece with sufficient force.

In one particular embodiment thereof the grinding or polishing tool comprises a tool body and a grinding or polishing member that is rotatable with respect to the tool body about a rotation axis, wherein the one or more biasing members comprise one or more counter-weights, wherein the tool holder is arranged for holding the grinding or polishing tool such that the one or more counter-weights are at an opposite side of the pivot axis with respect to the rotation axis. The tool holder can thus be biased to tilt upwards with its grinding or polishing member towards the workpiece, i.e. when grinding or polishing a side surface of the workpiece.

In an alternative embodiment thereof the grinding or polishing tool comprises a tool body and a grinding or polishing member that is rotatable with respect to the tool body about a rotation axis, wherein the one or more biasing members comprise one or more weights, wherein the tool holder is arranged for holding the grinding or polishing tool such that the one or more weights are at the same side of the pivot axis as the rotation axis. The tool holder can thus be biased to tilt downwards with its grinding or polishing member towards the workpiece, i.e. when grinding or polishing a top surface of the workpiece or an edge of the workpiece at the transition from the side surface to the top surface.

In another embodiment the grinding or polishing device comprises the grinding or polishing tool. Preferably, the grinding or polishing tool is a right-angle grinder.

According to a second aspect, the invention provides a method for treating a workpiece using the grinding or polishing device according to any one of the aforementioned embodiments, wherein the method comprises the steps of converting at least one parameter indicative of the angular position of the tool holder about the pivot axis into the output signal and using said output signal for determining a control signal for controlling the multi-axis manipulator.

The method relates to the practical implementation of the grinding or polishing device according to the first aspect of the invention and therefore has the same technical advantages, which will not be repeated hereafter.

In one embodiment the output signal is representative of the angular position of the tool holder about the pivot axis.

In an alternative embodiment the output signal is representative of a proximity of the tool holder with respect to the mounting head and/or the workpiece.

In a further alternative embodiment the output signal is representative of an image of the tool holder and/or the workpiece.

In an embodiment the grinding or polishing tool comprises a tool body and a grinding or polishing member that is rotatable with respect to the tool body about a rotation axis, wherein the grinding or polishing tool is held by the tool holder such that the pivot axis extends perpendicular to the rotation axis.

In a further embodiment the method further comprises the step of controlling the multi-axis manipulator in response to the output signal from the sensor.

In another embodiment the method further comprises the step of controlling the multi-axis manipulator in response to the output signal from the sensor to adjust the position of the grinding or polishing device as a whole relative to the workpiece.

In another embodiment the method further comprises the step of controlling the position of the grinding or polishing device relative to the workpiece such that the grinding or polishing tool remains at a constant or substantially constant grinding or polishing angle to the workpiece.

In one particular embodiment thereof the workpiece has a side surface, wherein the grinding or polishing angle is kept constant at zero or substantially zero degrees when grinding or polishing the side surface. Hence, the grinding surface of the grinding or polishing member can be kept parallel or substantially parallel to the side surface.

In an alternative embodiment thereof the workpiece has a side surface, a top surface and an edge at the transition from the side surface to the top surface, wherein the grinding or polishing angle is kept in a range of zero to ten degrees, preferably zero to five degrees, when grinding or polishing the edge and/or the top surface. Hence, the grinding or polishing member can be made to contact the edge and/or the top surface with its outer tip only.

In a further embodiment the multi-axis manipulator is moved in a translation relative to the workpiece, wherein, based on the output signal from the sensor, a relationship is determined between translation of the multi-axis manipulator and the parameter indicative of the angular position of the tool holder about the pivot axis.

Preferably, the determination of the relationship comprises the use of a goniometric function with the angular position as one of the parameters.

Additionally or alternatively, the determination of the relationship comprises the use of a computer model representative of the mounting head, the tool holder and/or the grinding or polishing tool.

In another embodiment the tool holder is freely or passively rotated with respect to the mounting head about the pivot axis.

In another embodiment the pivot axis is horizontal or substantially horizontal during the step(s) of the method.

In another embodiment the grinding or polishing tool is biased to rotate about the pivot axis in a bias direction.

In one particular embodiment thereof the grinding or polishing tool comprises a tool body and a grinding or polishing member that is rotatable with respect to the tool body about a rotation axis, wherein the grinding or polishing tool is biased to move in an upward rotation about the pivot axis at the same side of the pivot axis as the rotation axis.

In an alternative embodiment thereof the grinding or polishing tool comprises a tool body and a grinding or polishing member that is rotatable with respect to the tool body about a rotation axis, wherein the grinding or polishing tool is biased to move in an upward rotation about the pivot axis at an opposite side of the pivot axis with respect to the rotation axis.

### BRIEF DESCRIPTION OF THE DRAWINGS

The invention will be elucidated on the basis of an exemplary embodiment shown in the attached schematic drawings, in which:
figure 1 shows a side view of a grinding device according to a first exemplary embodiment of the invention;
figure 2 shows a side view of an alternative grinding device according to a second exemplary embodiment of the invention;
figure 3 shows a side view of a further alternative grinding device according to a third exemplary embodiment of the invention;
figures 4-6 show side views of the grinding device according to figure 1 during the steps of a method for grinding a side surface of a workpiece;
figures 7 and 8 show side views of the grinding device according to figure 1 during the steps of a method for grinding an edge and/or a top surface of a workpiece;
figure 9 shows a side view of a further alternative grinding device according to a fourth exemplary embodiment of the invention; and
figure 10 shows a side view of a further alternative grinding device according to a fifth exemplary embodiment of the invention.

### DETAILED DESCRIPTION OF THE INVENTION

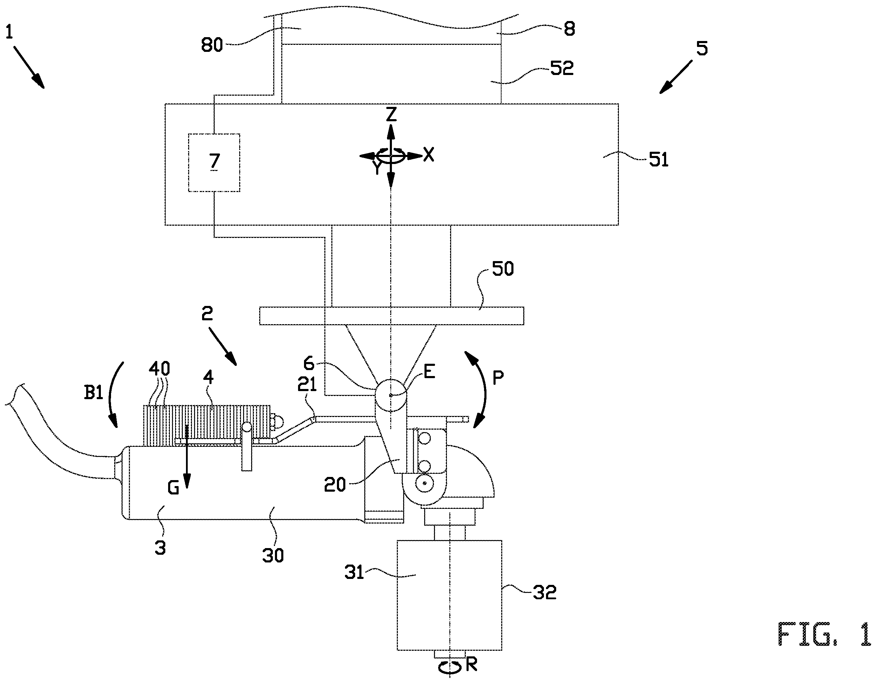

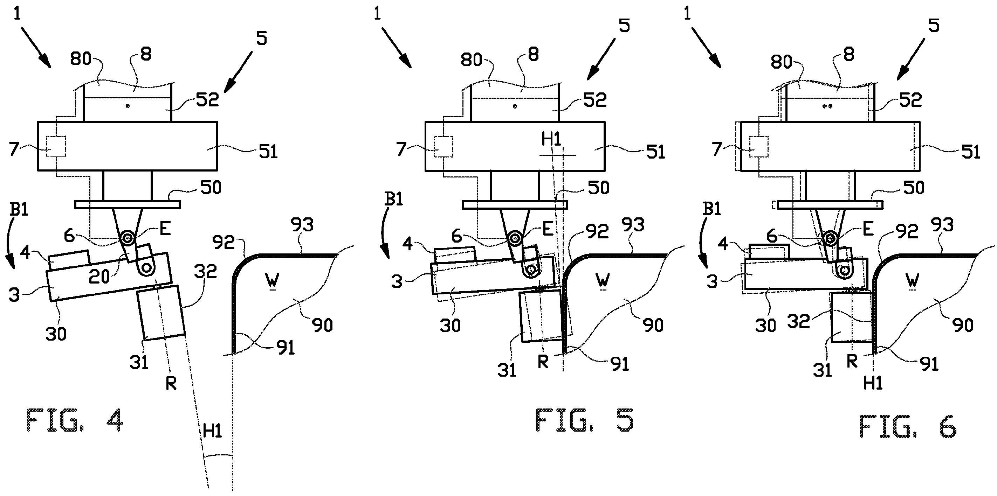

Figure 1 shows a surface treatment device, in particular a grinding device 1, according to a first exemplary embodiment of the invention. The grinding device 1 is used for grinding a contour or along a contour of a workpiece W, as shown in figures 4-6.

The grinding device 1 comprises a tool holder 2 for holding a grinding tool 3. The grinding tool 3 comprises a tool body 30 and a grinding member 31 that is rotatable with respect to the tool body 30 about a rotation axis R. In this exemplary embodiment, the grinding tool 3 is a right-angle grinder. The grinding member 31 is a grinding roller, i.e. a cylindrical grinding member with a relatively long circumferential grinding surface 32 considered in a direction parallel to the rotation axis R. Different grinding tools 3, 103, 203 and/or grinding members 31, 131, 231 may be fitted, as shown by way of example in figures 1, 2 and 3. The alternative grinding tools 103, 203 and their application will be discussed later in this description.

The grinding device 1 further comprises a mounting head 5 for mounting the holder 2 to a multi-axis manipulator 8. The multi-axis manipulator 8 may for example be a robotic manipulator or a robot arm. In this exemplary embodiment, the multi-axis manipulator 8 has at least three degrees of freedom; a lateral translation X, a vertical translation Z and a yaw Y about a vertical axis. Preferably, the multi-axis manipulator 8 has more than three degrees of freedom.

The mounting head 5 comprises a mounting plate or a mounting flange 50 for connection to the tool holder 2, a housing 51 for accommodating various types of electronic equipment, like sensors, processors, memory, connectors and the like, and a gripper member 52 for releasable connection to a corresponding gripper member 80 of the multi-axis manipulator 8.

The tool holder 2 is rotatable with respect to the mounting head 5 about a pivot axis E. In particular, the tool holder 2 is freely or passively rotatable with respect to the mounting head 5 about the pivot axis E, as shown schematically in figure 1 with arrow P. During the grinding of the contour of the workpiece W, said pivot axis E extends horizontally or substantially horizontally. Consequently, the tool holder 2 and the grinding tool 3 held by said tool holder 2 can be pivoted or tilted about the pivot axis E in a vertical or substantially vertical plane. Preferably, the rotation axis R of the grinding member 31 extends within or parallel to said vertical plane.

As shown in figure 1, the tool holder 2 is arranged for holding the grinding tool 3 such that the pivot axis E extends perpendicular to the rotation axis R. In particular, the tool holder 2 comprises a first frame member 20 for holding the tool body 30 at a position relatively close to the grinding member 31 and/or the pivot axis E and a second frame member 21 that extends towards the rear end of the tool body 30 with respect to the grinding member 31 for holding the tool body 30 at or near said rear end. The grinding tool 3 is connected to the frame members 20, 21 through suitable fasteners or clamps. Hence, the grinding tool 3 can be held reliably and/or securely by said tool holder 2.

It will be clear that the tool holder 2 may be used for holding another surface treatment tool, i.e. a polishing tool, a sanding tool or the like (not shown) with a corresponding polishing member. Hence, the grinding device could be renamed as a polishing device, or a surface treatment device in general.

As shown in figure 1, the tool holder 2 further comprises one or more biasing members 4 for biasing the tool holder 2 and/or the grinding tool 3 to rotate about the pivot axis E in a first bias direction B1. In this exemplary embodiment, the one or more biasing members 4 are formed by one or more counter-weights 40 that exert or generate a gravitational force G on the tool holder 2 and/or the grinding tool 3. The tool holder 2 is arranged for holding the grinding tool 3 such that the one or more counter-weights 40 are at an opposite side of the pivot axis E with respect to the rotation axis R. Hence, the grinding tool 3 is biased to tilt or pivot downwards at the rear end of its tool body 30, in other words biasing the grinding member 31 at the front to tilt upwards about the pivot axis E.

The grinding device 1 further comprises a sensor, in particular a rotary encoder 6, for converting at least one parameter indicative of an angular position of the tool holder 2 about the pivot axis E into an output signal that can be used for determining a control signal for controlling the multi-axis manipulator 8. In this particular example, the rotary encoder 6 is arranged for directly converting an angular position of the tool holder 2 about the pivot axis E into an output signal representative of said angular position. The grinding device 1 comprises a control unit 7 that is operationally connected to the rotary encoder 6 for receiving the output signal from said rotary encoder 6. The control unit 7 may be accommodated on or in the housing 51 of the mounting head 5. Alternatively, the control unit 7 may be provided in or on the multi-axis manipulator 8 or even remotely, i.e. in a control room spaced apart from the grinding device 1 and the multi-axis manipulator 8. For the purpose of this invention, such a control unit 7 is still considered a part of the grinding device 1, either directly or indirectly.

The control unit 7 is arranged for sending a control signal to the multi-axis manipulator 8 in response to the output signal received from the rotary encoder 6. In other words, the control unit 7 is able to receive and store the output signal from the rotary encoder 6, and then convert said output signal into a control signal for the multi-axis manipulator 8.

As shown in figures 4-6, the multi-axis manipulator 8 is arranged for positioning the grinding device 1 as a whole with respect to the contour of the workpiece W. In this exemplary embodiment, the workpiece W has a side surface 91, a top surface 93 and an edge 92 at the transition from the side surface 91 to the top surface 93. The side surface 91, the edge 92 and the top surface 93 together form the contour of the workpiece W. In this particular case, the side surface 91 extends vertically or substantially vertically and the top surface 93 extends horizontally or substantially horizontally.

The control unit 7 is arranged for sending the control signal to the multi-axis manipulator 8 in response to the output signal from the rotary encoder 6 to adjust the position of the grinding device 1 relative to the contour of the workpiece W. In particular, the position of the grinding device 1 is controlled in such a way that, once the grinding tool 1 is positioned correctly with respect to the workpiece W, the grinding tool 1 remains at a constant or substantially constant grinding angle H1 to the workpiece W when following the contour of the workpiece W.

In the example as shown in figures 4-6, the grinding tool 3 is made to approach the workpiece W to perform a grinding operation or process on the side surface 91. In the situation as shown in figure 4, the grinding device 1 is still in a position in which the grinding tool 3 is spaced apart from the workpiece W. Hence, the grinding tool 3 is biased by the counter-weights 40 in the first bias direction B1 until it arrives in an equilibrium position, tilted with its grinding member 31 upwards with respect to the workpiece W. Note that in this position, the grinding angle H1, defined as the angle between the grinding surface 32 of the grinding member 31 and the side surface 91 of the workpiece W, is considerable. As the grinding device 1 is moved closer to the workpiece W by the multi-axis manipulator 8, the grinding member 31 will contact or abut the side surface 91 of the workpiece W and - as a result of said contact - will start to tilt or pivot about the pivot axis E in a direction against the bias of the counter-weights 40. The grinding angle H1 decreases and the grinding surface 32 starts to become aligned, or parallel, with the side surface 91 of the workpiece W.

Figure 5 may represent a situation in which the multi-axis manipulator 8 has reached a position in which the grinding tool 31 should be in the correct position relative to the side surface 91 of the workpiece W, at least based on the knowledge of the contour of the workpiece W. However, it can be observed that in figure 5, the grinding surface 32 is still at a small grinding angle H1 to the side surface 91. The output signal from the rotary encoder 6 will reflect this position. Hence, the control unit 7 may send a control signal to the multi-axis manipulator 8 to further adjust or correct the position of the grinding device 1 relative to workpiece W until the output signal from the rotary encoder 6 indicates that the grinding angle H1 is correct, as shown in figure 6 in dashed lines (incorrect position) and solid lines (corrected or adjusted position).

The rotary encoder 6, the control unit 7 and the multi-axis manipulator 8 may continue to operate in the aforementioned feedback loop during the grinding operation or process to ensure that - as long as the grinding tool 3 is grinding the side surface 92 of the workpiece W - the grinding angle H1 remains constant or substantially constant. Hence, the relative position of the grinding device 1 with respect to the workpiece W can be continuously corrected to compensate for irregularities or deviations of the contour of the workpiece W from the expected contour. Consequently, an effective compliance between the multi-axis manipulator 8 and the workpiece W can be obtained.

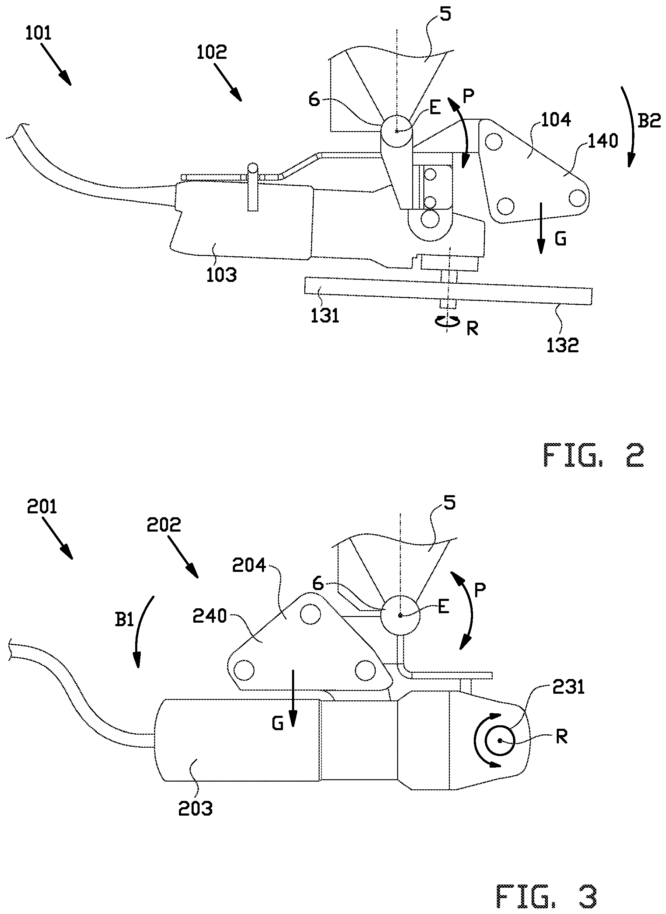

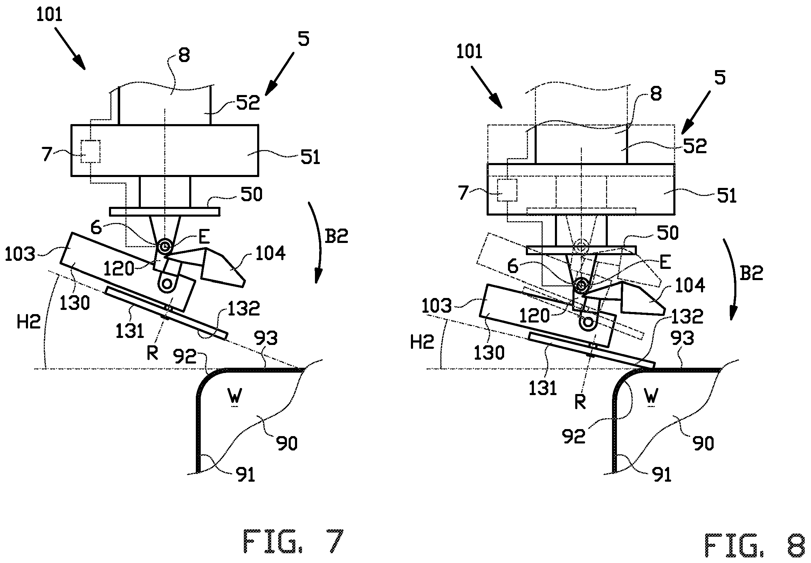

Figure 2 shows an alternative grinding device 101 according to a second exemplary embodiment of the invention, that differs from the previously discussed grinding device 1 in that its tool holder 102 is arranged for holding a grinding tool 103 with a disc-shaped grinding member 131. Said grinding tool 103 is used to grind the edge 92 or the top surface 93 of a workpiece W at a relatively small, oblique grinding angle H2, as shown by way of example in figures 7 and 8.

In the situation as shown in figure 7, the planar grinding surface 132 of the grinding member 103 is at a relatively large oblique grinding angle H2 to the top surface 93 of the workpiece W. This is reflected in the output signal of the rotary encoder 6. As shown in figure 8, an appropriate control signal is send by the control unit 7 to the multi-axis manipulator 8 to cause the alternative grinding device 101 to move further down towards or onto the top surface 93, thereby reducing the grinding angle H2 to a value or a range that is within the desired range for grinding the top surface 93.

The alternative grinding device 101 further differs from the previously discussed grinding device 1 in that the one or more biasing members 104 are located at the same side of the pivot axis E as the rotation axis R of the grinding member 131. Hence, the one or more biasing members 104 contribute to the downward tilt or pivot of the grinding tool 103 at the side of the grinding member 131. In this exemplary embodiment, the one or more biasing members 104 are formed as weights 140.

Figure 3 shows a further alternative grinding device 201 according to a third exemplary embodiment of the invention that differs from the aforementioned grinding devices 1, 101 in that its tool holder 202 is arranged for holding a grinding tool 203 with a relatively small cylindrical grinding stone 231. Typically, said grinding tool 203 is used to manually grind hard to reach places, such as cavities, ridges and corners in the workpiece W. Note that the grinding tool 203 is mounted in the tool holder 203 in sideways orientation, i.e. with the rotation axis R of the grinding member 231 parallel or substantially parallel to the pivot axis E. Although in this embodiment, a pivoting movement or rotation P about the pivot axis E has no effect on the grinding angle, the feedback from the rotary encoder 6 can still be used to determine whether the grinding stone 231 is in the correct or expected position relative to the contour of the workpiece W.

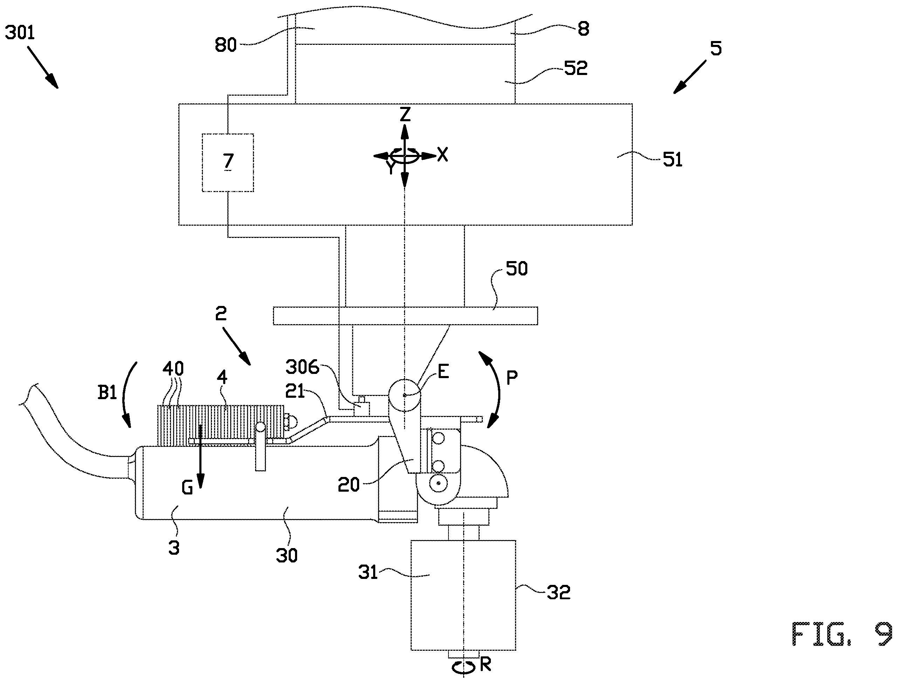

Figure 9 shows a further alternative grinding device 301 according to a fourth exemplary embodiment of the invention that differs from the previously discussed grinding devices 1, 101, 201 in that its sensor is a proximity sensor 306 for measuring a proximity of the tool holder 2 with respect to the mounting head 5 and/or the workpiece W. Hence, the output signal is representative of said proximity. The proximity sensor 306 can act as a switch to indicate a zero position of the tool holder 2 relative to the mounting head 5 and/or to determine a relationship between the measured proximity and the angular position of the tool holder 2 relative to the mounting head5 and/or the workpiece W.

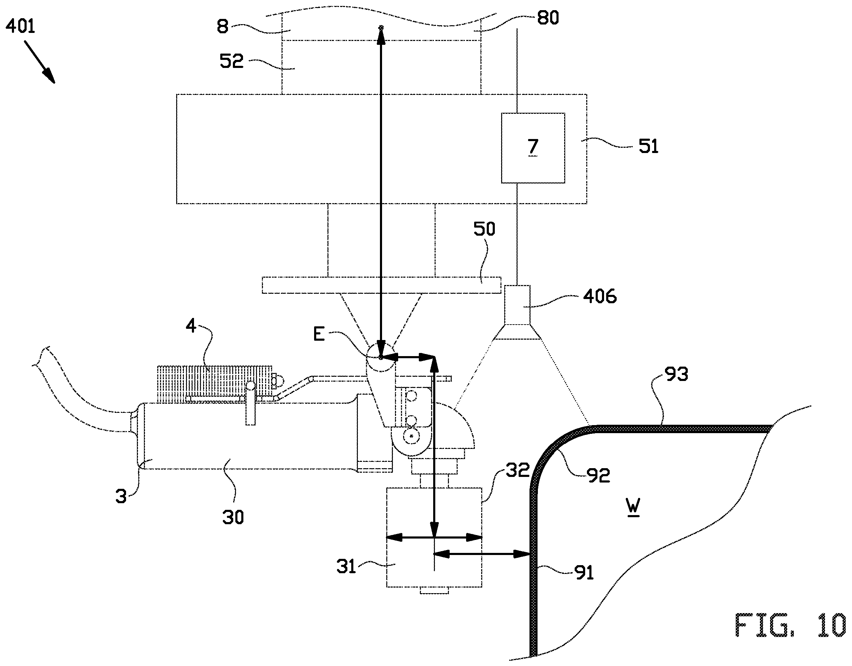

Figure 10 shows a further alternative grinding device 401 according to a fifth exemplary embodiment of the invention that differs from the previously discussed grinding devices 1, 101, 201, 301 in that its sensor is a an imaging device 406 for capturing an image of the tool holder 2 and/or the workpiece W. Hence, the output signal is representative of said image. The captured image can be used to determine the position of the workpiece W relative to the multi-axis manipulator 8, the mounting head 5 and/or the tool holder 2 or the position of the tool holder 2 relative to the multi-axis manipulator 8, the mounting head 3 and/or the workpiece W. This information can be used to indirectly determine a relationship between the relative position(s) and the angular position of the tool holder 2 relative to the mounting head 5 and/or the workpiece W.

In both of these embodiment, the control unit 7 is arranged for determining, based on the output signal from the sensor 306, 406, a relationship between translation of the multi-axis manipulator 8 and the parameter directly or indirectly indicative of the angular position of the tool holder 2 about the pivot axis E. Said relationship can be used to determine the appropriate control signal for the multi-axis manipulator 8 to position the tool holder 2 in a position that corresponds to a certain angular position in accordance with said relationship.

Preferably, the determination of the relationship comprises the use of a goniometric function with the angular position as one of the parameters. A goniometric function, in particular a trigonometric function, can be used to easily calculate the relationship between a translation of the multi-axis manipulator 8 and the resulting angular position.

As shown in figure 10, the determination of the relationship may additionally or alternatively comprise the use of a computer model representative of the mounting head 5, the tool holder 2 and/or the grinding tool 3. The computer model can be an accurate representation of the mounting head 5, the tool holder 2 and/or the grinding tool 3, including, but not limited to, dimensions, shape and/or mechanical properties, such as joints, hinges and the degrees of freedom thereof.

It is to be understood that the above description is included to illustrate the operation of the preferred embodiments and is not meant to limit the scope of the invention. From the above discussion, many variations will be apparent to one skilled in the art that would yet be encompassed by the scope of the present invention as defined by the appended claims.

## Claims

1. Grinding or polishing device (1, 101, 201, 301) for treating a workpiece (W), wherein the grinding or polishing device (1, 101, 201, 301) comprises a tool holder (2, 102, 202) for holding a grinding or polishing tool (3, 103, 203) and a mounting head (5) for mounting the tool holder (2, 102, 202) to a multi-axis manipulator (8), wherein the tool holder (2, 102, 202) is rotatable with respect to the mounting head (5) about a pivot axis (E), **characterized in that** the grinding or polishing device (1, 101, 201, 301) further comprises a sensor (6, 306, 406) for converting at least one parameter indicative of an angular position of the tool holder (2, 102, 202) about the pivot axis (E) into an output signal for determining a control signal for controlling the multi-axis manipulator (8).

2. Grinding or polishing device according to claim 1, wherein:
the sensor (6, 306, 406) is a rotary encoder for measuring the angular position of the tool holder (2, 102, 202) about the pivot axis (E), wherein the output signal is representative of said angular position; or
the sensor (6, 306, 406) is a proximity sensor (6, 306, 406) for measuring a proximity of the tool holder (2, 102, 202) with respect to the mounting head (5) and/or the workpiece (W), wherein the output signal is representative of said proximity; or
the sensor (6, 306, 406) is an imaging device for capturing an image of the tool holder (2, 102, 202) and/or the workpiece (W), wherein the output signal is representative of said image.

3. Grinding or polishing device according to any one of the preceding claims, wherein the grinding or polishing device (1, 101, 201, 301) comprises a control unit (7) that is operationally connected to the sensor (6, 306, 406) for receiving the output signal from said sensor (6, 306, 406), wherein the control unit (7) is arranged for sending the control signal to the multi-axis manipulator (8) in response to the output signal from the sensor (6, 306, 406),
preferably wherein the multi-axis manipulator (8) is arranged for positioning the grinding or polishing device (1, 101, 201, 301) as a whole with respect to the workpiece (W), wherein the control unit (7) is arranged for sending the control signal to the multi-axis manipulator (8) in response to the output signal from the sensor (6, 306, 406) to adjust the position of the grinding or polishing device (1, 101, 201, 301) relative to the workpiece (W),
more preferably wherein the control unit (7) is arranged for controlling the position of the grinding or polishing device (1, 101, 201, 301) relative to the workpiece (W) such that the grinding or polishing tool (3, 103, 203) remains at a constant or substantially constant grinding or polishing angle (H1, H2) to the workpiece (W).

4. Grinding or polishing device according to claim 3, wherein the control unit (7) is arranged for sending a control signal to the multi-axis manipulator (8) to move said multi-axis manipulator (8) in a translation (X) relative to the workpiece (W), wherein the control unit (7) is further arranged for determining, based on the output signal from the sensor (6, 306, 406), a relationship between translation (X) of the multi-axis manipulator (8) and the parameter indicative of the angular position of the tool holder (2, 102, 202) about the pivot axis (E),
preferably wherein the determination of the relationship comprises the use of a goniometric function with the angular position as one of the parameters; or
wherein the determination of the relationship comprises the use of a computer model representative of the mounting head (5), the tool holder (2, 102, 202) and/or the grinding or polishing tool (3, 103, 203).

5. Grinding or polishing device according to any one of the preceding claims, wherein the tool holder (2, 102, 202) is freely or passively rotatable with respect to the mounting head (5) about the pivot axis (E).

6. Grinding or polishing device according to any one of the preceding claims, wherein the grinding or polishing device (1, 101, 201, 301) comprises the grinding or polishing tool (3, 103, 203),
preferably wherein the grinding or polishing tool is a right-angle grinder.

7. Grinding or polishing device according to claim 6, wherein the grinding or polishing tool (3, 103, 203) comprises a tool body (30) and a grinding or polishing member (31, 131, 231) that is rotatable with respect to the tool body (30) about a rotation axis (R), wherein the tool holder (2, 102, 202) is arranged for holding the grinding or polishing tool (3, 103, 203) such that the pivot axis (E) extends perpendicular to the rotation axis (R).

8. Grinding or polishing device according to claim 6 or 7, wherein the tool holder (2, 102, 202) further comprises one or more biasing members (4, 104) for biasing the grinding or polishing tool (3, 103, 203) to rotate about the pivot axis (E) in a bias direction (B1),
preferably wherein the grinding or polishing tool (3, 103, 203) comprises a tool body (30) and a grinding or polishing member (31, 131, 231) that is rotatable with respect to the tool body (30) about a rotation axis (R), wherein the one or more biasing members (4, 104) comprise:
one or more counter-weights (40, 140), wherein the tool holder (2, 102, 202) is arranged for holding the grinding or polishing tool (3, 103, 203) such that the one or more counter-weights (40, 140) are at an opposite side of the pivot axis (E) with respect to the rotation axis (R); or
one or more weights (40, 140), wherein the tool holder (2, 102, 202) is arranged for holding the grinding or polishing tool (3, 103, 203) such that the one or more weights (40, 140 are at the same side of the pivot axis (E) as the rotation axis (R).

9. Method for treating a workpiece (W) using the grinding or polishing device (1, 101, 201, 301) according to any one of the preceding claims, **characterized in that** the method comprises the steps of converting at least one parameter indicative of the angular position of the tool holder (2, 102, 202) about the pivot axis (E) into the output signal and using said output signal for determining a control signal for controlling the multi-axis manipulator (8).

10. Method according to claim 9, wherein the output signal is representative of:
the angular position of the tool holder (2, 102, 202) about the pivot axis (E); or
a proximity of the tool holder (2, 102, 202) with respect to the mounting head (5) and/or the workpiece (W); or
an image of the tool holder (2, 102, 202) and/or the workpiece (W).

11. Method according to claim 9 or 10, wherein the grinding or polishing tool (3, 103, 203) comprises a tool body (30) and a grinding or polishing member (31, 131, 231) that is rotatable with respect to the tool body (30) about a rotation axis (R), wherein the grinding or polishing tool (3, 103, 203) is held by the tool holder (2, 102, 202) such that the pivot axis (E) extends perpendicular to the rotation axis (R).

12. Method according to any one of claims 9-11, wherein the method further comprises the step of controlling the multi-axis manipulator (8) in response to the output signal from the sensor (6, 306, 406), in particular to adjust the position of the grinding or polishing device (1, 101, 201, 301) as a whole relative to the workpiece (W).

13. Method according to any one of claims 9-12, wherein the method further comprises the step of controlling the position of the grinding or polishing device (1, 101, 201, 301) relative to the workpiece (W) such that the grinding or polishing tool (3, 103, 203) remains at a constant or substantially constant grinding or polishing angle (H1, H2) to the workpiece (W),
preferably wherein the workpiece (W) has a side surface (91), wherein the grinding or polishing angle (H1, H2) is kept constant at zero or substantially zero degrees when grinding or polishing the side surface (91); or
wherein the workpiece (W) has a side surface (91), a top surface (93) and an edge (92) at the transition from the side surface (91) to the top surface (93), wherein the grinding or polishing angle (H1, H2) is kept in a range of zero to ten degrees, preferably zero to five degrees, when grinding or polishing the edge (92) and/or the top surface (93).

14. Method according to any one of claims 9-13, wherein the multi-axis manipulator (8) is moved in a translation (X) relative to the workpiece (W), wherein, based on the output signal from the sensor (6, 306, 406), a relationship is determined between translation (X) of the multi-axis manipulator (8) and the parameter indicative of the angular position of the tool holder (2, 102, 202) about the pivot axis (E),
preferably wherein the determination of the relationship comprises the use of a goniometric function with the angular position as one of the parameters; or
wherein the determination of the relationship comprises the use of a computer model representative of the mounting head (5), the tool holder (2, 102, 202) and/or the grinding or polishing tool (3, 103, 203).

15. Method according to any one of claims 9-14, wherein the grinding or polishing tool (3, 103, 203) is biased to rotate about the pivot axis (E) in a bias direction (B1),
preferably wherein the grinding or polishing tool (3, 103, 203) comprises a tool body (30) and a grinding or polishing member (31, 131, 231) that is rotatable with respect to the tool body (30) about a rotation axis (R), wherein the grinding or polishing tool (3, 103, 203) is biased to move in an upward rotation (P) about the pivot axis (E) at the same side of the pivot axis (E) as the rotation axis (R) or in an upward rotation (P) about the pivot axis (E) at an opposite side of the pivot axis (E) with respect to the rotation axis (R).

## Patentansprüche

1. Schleif- oder Poliervorrichtung (1, 101, 201, 301) zum Bearbeiten eines Werkstücks (W), wobei die Schleif- oder Poliervorrichtung (1, 101, 201, 301) einen Werkzeughalter (2, 102, 202) zum Halten eines Schleif- oder Polierwerkzeugs (3, 103, 203) und einen Montagekopf (5) zum Montieren des Werkzeughalters (2, 102, 202) an einen Mehrachsenmanipulator (8) umfasst, wobei der Werkzeughalter (2, 102, 202) gegenüber dem Montagekopf (5) um eine Schwenkachse (E) drehbar ist, **dadurch gekennzeichnet, dass** die Schleif- oder Poliervorrichtung (1, 101, 201, 301) weiter einen Sensor (6, 306, 406) zum Umwandeln von mindestens einem Parameter, der auf eine Winkelposition des Werkzeughalters (2, 102, 202) um die Schwenkachse (E) hinweist, in ein Ausgabesignal zum Bestimmen eines Steuersignals zum Steuern des Mehrachsenmanipulators (8).

2. Schleif- oder Poliervorrichtung nach Anspruch 1, wobei:
der Sensor (6, 306, 406) ein Drehgeber zum Messen der Winkelposition des Werkzeughalters (2, 102, 202) um die Schwenkachse (E) ist, wobei das Ausgabesignal für die Winkelposition repräsentativ ist; oder
der Sensor (6, 306, 406) ein Näherungssensor (6, 306, 406) zum Messen einer Nähe des Werkzeughalters (2, 102, 202) in Bezug zu dem Montagekopf (5) und/oder das Werkstück (W) ist, wobei das Ausgabesignal für die Nähe repräsentativ ist; oder
der Sensor (6, 306, 406) eine Bildaufnahmevorrichtung zum Erfassen eines Bildes des Werkzeughalters (2, 102, 202) und/oder des Werkstücks (W) ist, wobei das Ausgabesignal für das Bild repräsentativ ist.

3. Schleif- oder Poliervorrichtung nach einem der vorstehenden Ansprüche, wobei die Schleif- oder Poliervorrichtung (1, 101, 201, 301) eine Steuereinheit (7) umfasst, die funktionsfähig mit dem Sensor (6, 306, 406) verbunden ist, um das Ausgabesignal von dem Sensor (6, 306, 406) zum empfangen, wobei die Steuereinheit (7) angeordnet ist, das Steuersignal in Reaktion auf das Ausgabesignal von dem Sensor (6, 306, 406) an den Mehrachsenmanipulator (8) zu senden,
vorzugsweise wobei der Mehrachsenmanipulator (8) angeordnet ist, die Schleif- oder Poliervorrichtung (1, 101, 201, 301) als Ganzes in Bezug zu dem Werkstück (W) zu positionieren, wobei die Steuereinheit (7) angeordnet ist, das Steuersignal an den Mehrachsenmanipulator (8) als Reaktion auf das Ausgangssignal von dem Sensor (6, 306, 406) zum Anpassen der Position der Schleif- oder Poliervorrichtung (1, 101, 201, 301) in Bezug zu dem Werkstück (W) zu senden,
weiter vorzugsweise wobei die Steuereinheit (7) angeordnet ist, die Position der Schleif- oder Poliervorrichtung (1, 101, 201, 301) in Bezug zu dem Werkstück (W) zu steuern, sodass das Schleif- oder Polierwerkzeug (3, 103, 203) in einem konstanten oder im Wesentlichen konstanten Schleif- oder Polierwinkel (H1, H2) zum Werkstück (W) verbleibt.

4. Schleif- oder Poliervorrichtung nach Anspruch 3, wobei die Steuereinheit (7) angeordnet ist, ein Steuersignal an den Mehrachsmanipulator (8) zu senden, um den Mehrachsenmanipulator (8) in einer Translation (X) in Bezug zu dem Werkstück (W) zu bewegen, wobei die Steuereinheit (7) ferner angeordnet ist, basierend auf dem Ausgabesignal aus dem Sensor (6, 306, 406) eine Beziehung zwischen der Translation (X) des Mehrachsenmanipulators (8) und dem Parameter, der auf die Winkelposition des Werkzeughalters (2, 102, 202) um die Schwenkachse (E) hinweist, zu bestimmen,
vorzugsweise wobei die Bestimmung der Beziehung die Verwendung einer goniometrischen Funktion mit der Winkelposition als einen der Parameter umfasst; oder
wobei die Bestimmung der Beziehung die Verwendung eines Computermodells umfasst, das den Montagekopf (5), den Werkzeughalter (2, 102, 202) und/oder das Schleif- oder Polierwerkzeug (3, 103, 203) repräsentiert.

5. Schleif- oder Poliervorrichtung nach einem der vorstehenden Ansprüche, wobei der Werkzeughalter (2, 102, 202) in Bezug auf den Montagekopf (5) frei oder passiv um die Schwenkachse (E) drehbar ist.

6. Schleif- oder Poliervorrichtung nach einem der vorstehenden Ansprüche, wobei die Schleif- oder Poliervorrichtung (1, 101, 201, 301) das Schleif- oder Polierwerkzeug (3, 103, 203) umfasst,
vorzugsweise wobei das Schleif- oder Polierwerkzeug ein Winkelschleifer ist.

7. Schleif- oder Poliervorrichtung nach Anspruch 6, wobei das Schleif- oder Polierwerkzeug (3, 103, 203) einen Werkzeugkörper (30) und ein Schleif- oder Polierelement (31, 131, 231) umfasst, das in Bezug auf den Werkzeugkörper (30) um eine Drehachse (R) drehbar ist, wobei der Werkzeughalter (2, 102, 202) angeordnet ist, um die Schleif- oder Poliervorrichtung (3, 103, 203) zu halten, sodass sich die Schwenkachse (E) senkrecht zur Drehachse (R) erstreckt.

8. Schleif- oder Poliervorrichtung nach Anspruch 6 oder 7, wobei der Werkzeughalter (2, 102, 202) weiter ein oder mehrere Vorspannelemente (4, 104) umfasst, um das Schleif- oder Polierwerkzeugs (3, 103, 203) dazu vorzuspannen, sich um die Schwenkachse (E) in einer Vorspannrichtung (B1) zu drehen,
vorzugsweise wobei das Schleif- oder Polierwerkzeug (3, 103, 203) einen Werkzeugkörper (30) und ein Schleif- oder Polierelement (31, 131, 231) umfasst, das in Bezug auf den Werkzeugkörper (30) um eine Drehachse (R) drehbar ist, wobei das eine oder die mehreren Vorspannelemente (4, 104) umfasst:
ein oder mehrere Gegengewichte (40, 140), wobei der Werkzeughalter (2, 102, 202) angeordnet ist, um die Schleif- oder Poliervorrichtung (3, 103, 203) zu halten, so dass sich das eine oder die mehreren Gegengewichte (40, 140) in Bezug auf die Drehachse (R) auf einer gegenüberliegenden Seite der Schwenkachse (E) befinden; oder
ein oder mehrere Gewichte (40, 140), wobei der Werkzeughalter (2, 102, 202) angeordnet ist, das Schleif- oder Polierwerkzeug (3, 103, 203) zu halten, so dass sich das eine oder die mehreren Gegengewichte (40, 140) auf derselben Seite der Schwenkachse (E) wie die Drehachse (R) befinden.

9. Verfahren zur Bearbeitung eines Werkstücks (W) unter Verwendung der Schleif- oder Poliervorrichtung (1, 101, 201, 301) gemäß einem der vorstehenden Ansprüche, **dadurch gekennzeichnet, dass** das Verfahren die Schritte umfasst, mindestens einen Parameter, der auf die Winkelposition des Werkzeughalters (2, 102, 202) um die Schwenkachse (E) hinweist, in das Ausgabesignal umzuwandeln und das Ausgabesignal zur Bestimmung eines Steuersignals zum Steuern des Mehrachsenmanipulators (8) zu verwenden.

10. Verfahren nach Anspruch 9, wobei das Ausgabesignal repräsentativ ist für:
die Winkelposition des Werkzeughalters (2, 102, 202) um die Schwenkachse (E); oder
eine Nähe des Werkzeughalters (2, 102, 202) in Bezug auf den Montagekopf (5) und/oder das Werkstück (W); oder
ein Bild des Werkzeughalters (2, 102, 202) und/oder des Werkstücks (W).

11. Verfahren nach Anspruch 9 oder 10, wobei das Schleif- oder Polierwerkzeug (3, 103, 203) einen Werkzeugkörper (30) und ein Schleif- oder Polierelement (31, 131, 231) umfasst, das in Bezug auf den Werkzeugkörper (30) um eine Drehachse (R) drehbar ist, wobei das Schleif- oder Polierwerkzeug (3, 103, 203) von dem Werkzeughalter (2, 102, 202) gehalten ist, so dass sich die Schwenkachse (E) senkrecht zur Drehachse (R) erstreckt.

12. Verfahren nach einem der Ansprüche 9 bis 11, wobei das Verfahren weiter den Schritt des Steuerns des Mehrachsenmanipulators (8) in Reaktion auf das Ausgabesignal des Sensors umfasst, insbesondere um die Position (6, 306, 406) der Schleif- und/oder Poliervorrichtung (1, 101, 201, 301) als Ganzes in Bezug zu dem Werkstück (W) anzupassen.

13. Verfahren nach einem der Ansprüche 9 bis 12, wobei das Verfahren weiter umfasst, die Position der Schleifvorrichtung (1, 101, 201, 301) in Bezug zu dem Werkstück (W) so zu steuern, so dass das Schleif- oder Polierwerkzeug (3, 102, 303) in einem konstanten oder im Wesentlichen konstanten Schleif- oder Polierwinkel (H1, H2) zum Werkstück (W) verbleibt,
vorzugsweise wobei das Werkstück (W) eine Seitenoberfläche (91) aufweist, wobei der Schleif- oder Polierwinkel (H1, H2) beim Schleifen oder Polieren der Seitenoberfläche (91) konstant bei null oder im Wesentlichen null Grad gehalten ist; oder
wobei das Werkstück (W) eine Seitenoberfläche (91), eine obere Oberfläche (93) und eine Kante (92) am Übergang von der Seitenoberfläche (91) zur oberen Oberfläche (93) aufweist, wobei der Schleif- oder Polierwinkel (H1, H2) beim Schleifen oder Polieren der Kante (92) und/oder der oberen Oberfläche (93) in einem Bereich zwischen 0 bis 10 Grad, vorzugswies 0 bis 5 Grad gehalten ist.

14. Verfahren nach einem der Ansprüche 9 bis 13, wobei der Mehrachsenmanipulator (8) in einer Translation (X) in Bezug zu dem Werkstück (W) bewegt wird, wobei basierend auf dem Ausgabesignal des Sensors (6, 306, 406) eine Beziehung zwischen der Translation (X) des Mehrachsenmanipulators (8) und dem Parameter, der auf die Winkelposition des Werkzeughalters (2, 102, 202) um die Schwenkachse (E) hinweist, bestimmt ist,
vorzugsweise wobei die Bestimmung der Beziehung die Verwendung einer goniometrischen Funktion mit der Winkelposition als einen der Parameter umfasst; oder
wobei die Bestimmung der Beziehung die Verwendung eines Computermodells umfasst, das den Montagekopf (5), den Werkzeughalter (2, 102, 202) und/oder das Schleif- oder Polierwerkzeug (3, 103, 203) repräsentiert.

15. Verfahren nach einem der Ansprüche 9 bis 14, wobei das Schleif- oder Polierwerkzeug (3, 103, 203) vorgespannt ist, sich um die Schwenkachse (E) in einer Vorspannungsrichtung (B1) zu drehen,
vorzugsweise wobei das Schleif- oder Polierwerkzeug (3, 103, 203) einen Werkzeugkörper (30) und ein Schleif- oder Polierelement (31, 131, 231) umfasst, das in Bezug auf den Werkzeugkörper (30) um eine Drehachse (R) drehbar ist, wobei das Schleif- oder Polierwerkzeug (3, 103, 203) vorgespannt ist, sich in einer Aufwärtsdrehung (P) um die Schwenkachse (E) auf derselben Seite der Schwenkachse (E) wie die Drehachse (R) oder in einer Aufwärtsdrehung (P) um die Schwenkachse (E) auf einer gegenüberliegenden Seite der Schwenkachse (E) in Bezug auf die Drehachse (R) zu bewegen.

## Revendications

1. Dispositif de meulage ou de polissage (1, 101, 201, 301) pour le traitement d'une pièce (W), dans lequel le dispositif de meulage ou de polissage (1, 101, 201, 301) comprend un porte-outil (2, 102, 202) destiné au maintien d'un outil de meulage ou de polissage (3, 103, 203) et une tête de montage (5) destinée au montage du porte-outil (2, 102, 202) sur un manipulateur à axes multiples (8), dans lequel le porte-outil (2, 102, 202) est apte à tourner par rapport à la tête de montage (5) autour d'un axe de pivotement (E), **caractérisé par le fait que** le dispositif de meulage ou de polissage (1, 101, 201, 301) comprend en outre un capteur (6, 306, 406) pour convertir au moins un paramètre indicatif d'une position angulaire du porte-outil (2, 102, 202) autour de l'axe de pivotement (E) en un signal de sortie pour déterminer un signal de commande pour commander le manipulateur à axes multiples (8).

2. Dispositif de meulage ou de polissage selon la revendication 1, dans lequel:
le capteur (6, 306, 406) est un codeur rotatif pour mesurer la position angulaire du porte-outil (2, 102, 202) autour de l'axe de pivotement (E), le signal de sortie étant représentatif de ladite position angulaire; ou
le capteur (6, 306, 406) est un capteur de proximité (6, 306, 406) pour mesurer une proximité du porte-outil (2, 102, 202) par rapport à la tête de montage (5) et/ou à la pièce (W), le signal de sortie étant représentatif de ladite proximité; ou
le capteur (6, 306, 406) est un dispositif d'imagerie pour capturer une image du porte-outil (2, 102, 202) et/ou de la pièce (W), le signal de sortie étant représentatif de ladite image.

3. Dispositif de meulage ou de polissage selon l'une quelconque des revendications précédentes, dans lequel le dispositif de meulage ou de polissage (1, 101, 201, 301) comprend une unité de commande (7) qui est connectée fonctionnellement au capteur (6, 306, 406) pour recevoir le signal de sortie provenant dudit capteur (6, 306, 406), l'unité de commande (7) étant conçue pour envoyer le signal de commande au manipulateur à axes multiples (8) en réponse au signal de sortie provenant du capteur (6, 306, 406),
de préférence, dans lequel le manipulateur à axes multiples (8) est conçu pour positionner le dispositif de meulage ou de polissage (1, 101, 201, 301) dans son ensemble par rapport à la pièce (W), dans lequel l'unité de commande (7) est conçue pour envoyer le signal de commande au manipulateur à axes multiples (8) en réponse au signal de sortie provenant du capteur (6, 306, 406) afin d'ajuster la position du dispositif de meulage ou de polissage (1, 101, 201, 301) par rapport à la pièce (W),
de façon davantage préférée, dans lequel l'unité de commande (7) est conçue pour commander la position du dispositif de meulage ou de polissage (1, 101, 201, 301) par rapport à la pièce (W) de telle sorte que l'outil de meulage ou de polissage (3, 103, 203) reste à un angle de meulage ou de polissage constant ou sensiblement constant (H1, H2) par rapport à la pièce (W).

4. Dispositif de meulage ou de polissage selon la revendication 3, dans lequel l'unité de commande (7) est conçue pour envoyer un signal de commande au manipulateur à axes multiples (8) afin de déplacer ledit manipulateur à axes multiples (8) dans une translation (X) par rapport à la pièce (W), l'unité de commande (7) étant en outre conçue pour déterminer, sur la base du signal de sortie provenant du capteur (6, 306, 406), une relation entre une translation (X) du manipulateur à axes multiples (8) et le paramètre indicatif de la position angulaire du porte-outil (2, 102, 202) autour de l'axe de pivotement (E),
de préférence, dans lequel la détermination de la relation comprend l'utilisation d'une fonction goniométrique avec la position angulaire comme l'un des paramètres; ou
dans lequel la détermination de la relation comprend l'utilisation d'un modèle informatique représentatif de la tête de montage (5), du porte-outil (2, 102, 202) et/ou de l'outil de meulage ou de polissage (3, 103, 203).

5. Dispositif de meulage ou de polissage selon l'une quelconque des revendications précédentes, dans lequel le porte-outil (2, 102, 202) est apte à tourner librement ou passivement par rapport à la tête de montage (5) autour de l'axe de pivotement (E).

6. Dispositif de meulage ou de polissage selon l'une quelconque des revendications précédentes, dans lequel le dispositif de meulage ou de polissage (1, 101, 201, 301) comprend l'outil de meulage ou de polissage (3, 103, 203),
de préférence, dans lequel l'outil de meulage ou de polissage est une meuleuse d'angle droit.

7. Dispositif de meulage ou de polissage selon la revendication 6, dans lequel l'outil de meulage ou de polissage (3, 103, 203) comprend un corps d'outil (30) et un élément de meulage ou de polissage (31, 131, 231) qui est apte à tourner par rapport au corps d'outil (30) autour d'un axe de rotation (R), le porte-outil (2, 102, 202) étant agencé pour maintenir l'outil de meulage ou de polissage (3, 103, 203) de telle sorte que l'axe de pivotement (E) s'étende perpendiculairement à l'axe de rotation (R).

8. Dispositif de meulage ou de polissage selon la revendication 6 ou 7, dans lequel le porte-outil (2, 102, 202) comprend en outre un ou plusieurs éléments de sollicitation (4, 104) pour solliciter l'outil de meulage ou de polissage (3, 103, 203) afin qu'il tourne autour de l'axe de pivotement (E) dans une direction de sollicitation (B1),
de préférence, dans lequel l'outil de meulage ou de polissage (3, 103, 203) comprend un corps d'outil (30) et un élément de meulage ou de polissage (31, 131, 231) qui est apte à tourner par rapport au corps d'outil (30) autour d'un axe de rotation (R), le ou les éléments de sollicitation (4, 104) comprenant:
un ou plusieurs contrepoids (40, 140), le porte-outil (2, 102, 202) étant agencé pour maintenir l'outil de meulage ou de polissage (3, 103, 203) de telle sorte que le ou les contrepoids (40, 140) se trouvent sur un côté opposé de l'axe de pivotement (E) par rapport à l'axe de rotation (R); ou
un ou plusieurs poids (40, 140), le porte-outil (2, 102, 202) étant agencé pour maintenir l'outil de meulage ou de polissage (3, 103, 203) de telle sorte que le ou les poids (40, 140) se trouvent du même côté de l'axe de pivotement (E) que l'axe de rotation (R).

9. Procédé de traitement d'une pièce (W) à l'aide du dispositif de meulage ou de polissage (1, 101, 201, 301) selon l'une quelconque des revendications précédentes, **caractérisé par le fait que** le procédé comprend les étapes consistant à convertir au moins un paramètre indicatif de la position angulaire du porte-outil (2, 102, 202) autour de l'axe de pivotement (E) en le signal de sortie et à utiliser ledit signal de sortie pour déterminer un signal de commande pour commander le manipulateur à axes multiples (8).

10. Procédé selon la revendication 9, dans lequel le signal de sortie est représentatif de:
la position angulaire du porte-outil (2, 102, 202) autour de l'axe de pivotement (E), ou
une proximité du porte-outil (2, 102, 202) par rapport à la tête de montage (5) et/ou à la pièce (W); ou
une image du porte-outil (2, 102, 202) et/ou de la pièce (W).

11. Procédé selon la revendication 9 ou 10, dans lequel l'outil de meulage ou de polissage (3, 103, 203) comprend un corps d'outil (30) et un élément de meulage ou de polissage (31, 131, 231) qui est apte à tourner par rapport au corps d'outil (30) autour d'un axe de rotation (R), dans lequel l'outil de meulage ou de polissage (3, 103, 203) est maintenu par le porte-outil (2, 102, 202) de telle sorte que l'axe de pivotement (E) s'étende perpendiculairement à l'axe de rotation (R).

12. Procédé selon l'une quelconque des revendications 9 à 11, dans lequel le procédé comprend en outre l'étape consistant à commander le manipulateur à axes multiples (8) en réponse au signal de sortie provenant du capteur (6, 306, 406), notamment pour ajuster la position du dispositif de meulage ou de polissage (1, 101, 201, 301) dans son ensemble par rapport à la pièce (W).

13. Procédé selon l'une quelconque des revendications 9 à 12, dans lequel le procédé comprend en outre l'étape consistant à commander la position du dispositif de meulage ou de polissage (1, 101, 201, 301) par rapport à la pièce (W) de telle sorte que l'outil de meulage ou de polissage (3, 103, 203) reste à un angle de meulage ou de polissage constant ou sensiblement constant (H1, H2) par rapport à la pièce (W),
de préférence, dans lequel, lorsque la pièce (W) présente une surface latérale (91), l'angle de meulage ou de polissage (H1, H2) est maintenu constant à zéro degré ou sensiblement à zéro degré lors du meulage ou du polissage de la surface latérale (91); ou
dans lequel la pièce (W) a une surface latérale (91), une surface supérieure (93) et un bord (92) à la transition de la surface latérale (91) à la surface supérieure (93), l'angle de meulage ou de polissage (H1, H2) étant maintenu dans une plage de zéro à dix degrés, de préférence de zéro à cinq degrés, lors du meulage ou du polissage du bord (92) et/ou de la surface supérieure (93).

14. Procédé selon l'une quelconque des revendications 9 à 13, dans lequel le manipulateur à axes multiples (8) est déplacé dans une translation (X) par rapport à la pièce (W), dans lequel, sur la base du signal de sortie provenant du capteur (6, 306, 406), une relation est déterminée entre une translation (X) du manipulateur à axes multiples (8) et le paramètre indicatif de la position angulaire du porte-outil (2, 102, 202) autour de l'axe de pivotement (E),
de préférence, dans lequel la détermination de la relation comprend l'utilisation d'une fonction goniométrique avec la position angulaire comme l'un des paramètres; ou
dans lequel la détermination de la relation comprend l'utilisation d'un modèle informatique représentatif de la tête de montage (5), du porte-outil (2, 102, 202) et/ou de l'outil de meulage ou de polissage (3, 103, 203).

15. Procédé selon l'une quelconque des revendications 9 à 14, dans lequel l'outil de meulage ou de polissage (3, 103, 203) est sollicité pour tourner autour de l'axe de pivotement (E) dans une direction de sollicitation (BI),
de préférence, dans lequel l'outil de meulage ou de polissage (3, 103, 203) comprend un corps d'outil (30) et un élément de meulage ou de polissage (31, 131, 231) qui est apte à tourner par rapport au corps d'outil (30) autour d'un axe de rotation (R), dans lequel l'outil de meulage ou de polissage (3, 103, 203) est sollicité pour se déplacer dans une rotation vers le haut (P) autour de l'axe de pivotement (E) du même côté de l'axe de pivotement (E) que l'axe de rotation (R) ou dans une rotation vers le haut (P) autour de l'axe de pivotement (E) d'un côté opposé de l'axe de pivotement (E) par rapport à l'axe de rotation (R).
